# EUROPÄISCHE PATENTANMELDUNG

(11) **EP 0 829 994 A2**
(43) Veröffentlichungstag der Anmeldung: **18.03.1998**
(21) Anmeldenummer: 97114131.2
(22) Anmeldetag: 16.08.1997
(51) Int. Cl.: H04M 1/72, H04M 1/65

(54) **Funkgerät mit Speicherung von Sprachinformationen**

(30) Priorität: 12.09.1996 DE 19637089
(71) Anmelder: Mannesmann VDO Aktiengesellschaft, 60388 Frankfurt/M. (DE)
(72) Erfinder: Tilgner, Rainer, 64380 Rossdorf (DE); Schmischke, Kai, 63543 Neuberg 1 (DE)
(74) Vertreter: Rassler, Andrea, Dipl.-Phys.

(57) **Zusammenfassung**

Die Erfindung betrifft eine Telekommunikationseinheit, insbesondere eine Mobilfunkeinrichtung, welche mittels eines digitalen Signalprozessors eine per Funk übermittelte Sprachinformation in eine digitale Sprachinformation umwandelt, die über eine Wandlereinheit als analoge Sprachsignale ausgegeben werden und/oder umgekehrt.

Um die Speicherung der übertragenen Sprachinformationen ohne großen Hardwareaufwand zu ermöglichen, ist in der Datenleitung zwischen Prozessor und Wandlereinheit ein Digitalspeicher zur digitalen Aufzeichnung der Sprachinformation angeordnet.

## Beschreibung

Die Erfindung betrifft eine Telekommunikationseinheit, insbesondere eine Mobilfunkeinrichtung, welche mittels eines digitalen Signalprozessors eine per Funk übermittelte Sprachinformation in eine digitale Sprachinformation umwandelt, die über eine Wandlereinheit als analoge Sprachsignale ausgegeben werden und/oder umgekehrt.

Mittels digitaler Funknetze, wie sie z. B. auf der Basis des paneuropäischen Mobilfunkstandards GSM (Global System for Mobile Communication) bestehen, ist eine vielfältige Kommunikation mit hoher Übertragungsqualität gewährleistet. In einem solchem GSM-Mobilfunknetz werden alle Sprachinformationen und Daten digital übertragen und verarbeitet. Die Codierung bzw. Decodierung der Sprachinformation erfolgt dabei auf der Empfängerseite in Endgeräten in einem digitalen Signalprozessor.

Die übertragenen Sprachsignale werden nach der Decodierung mit Hilfe eines Digital-/Analog-Wandlers wieder in ein analoges Signal umgesetzt.

Eine Speicherung der analogen Sprachinformation kann konventionell mittels Bandaufzeichnung erfolgen.

Soll eine digitale Speicherung erfolgen, muß das analoge Signal wieder in ein digitales Signal gewandelt werden, was einen zusätzlichen Hardwareaufwand zur Folge hat.

Der Erfindung liegt somit die Aufgabe zugrunde, eine Telekommunikationseinheit zu schaffen, die die Speicherung der übertragenen Sprachinformationen ohne großen Hardwareaufwand ermöglicht.

Erfindungsgemäß wird die Aufgabe dadurch gelöst, daß in der Datenleitung zwischen Signalprozessor und Wandlereinheit ein Signal für einen Digitalspeicher zur digitalen Aufzeichnung der Sprachinformation abgegriffen wird.

Der Vorteil der Erfindung besteht darin, daß die Daten noch vor dem Digital-/Analog-Wandler des GSM-Endgerätes abgegriffen und im 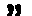 Original-Datenformat" in dem Digitalspeicher abgelegt werden. Ein erneutes Digitalisieren zur Speicherung entfällt. Eine zusätzliche Hardware ist demzufolge nicht notwendig.

Vorteilhafterweise ist der Digitalspeicher ein Halbleiterspeicher.

Die digitale Sprachinformation wird über einen D/A-Wandler an eine Freisprecheinrichtung ausgegeben, bzw. über einen A/D-Wandler von dieser empfangen.

In einer Weiterbildung wird die Speicherung der digitalen Sprachinformation mittels einer Eingabeeinheit gesteuert. Diese Eingabeeinheit weist eine Wiederholfunktion auf, mittels derer die Ausgabe der gespeicherten Sprachinformation abrufbar ist.

Die digitale Speicherung der Daten führt zu einer Verbesserung der Signalqualität, da bei Wiederausgabe der gespeicherten Daten das Rauschen der Signale unterbleibt.

In einer Ausbildung werden die Steuersignale drahtlos übertragen.

Die Steuersignale werden dabei in der Eingabeeinheit mit Hilfe einer alphanumerischen Tastatur erzeugt. Die Eingabeeinheit kann aber auch eine hochauflösende Eingabefläche zur Eingabe von alphanumerischen Daten durch Zeichnen aufweisen, mittels welcher die Steuersignale erzeugt werden.

Insbesondere im letzteren Fall liegt ein leicht erlernbares universelles Eingabemedium vor, das vielfältige Kommunikationsmöglichkeiten erlaubt.

Es ist besonders vorteilhaft, wenn die Eingabeeinheit mobil ausgebildet ist.

Die Erfindung läßt zahlreiche Ausführungformen zu. Zwei davon sollen anhand der in der Zeichnung dargestellten Figuren näher erläutert werden.

Es zeigt
- Fig. 1:: Prinzipdarstellung der erfindungsgemäßen Lösung

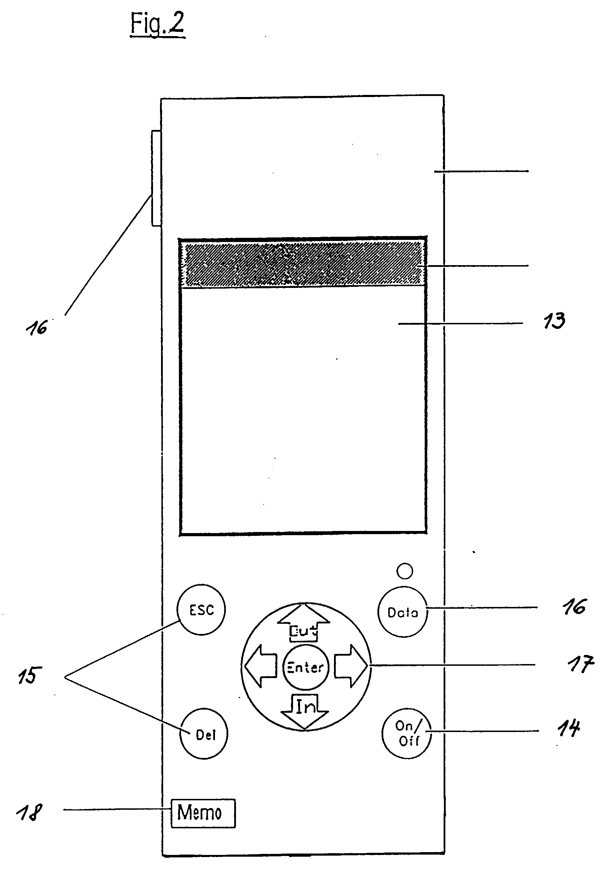

- Fig. 2:: Eingabegerät

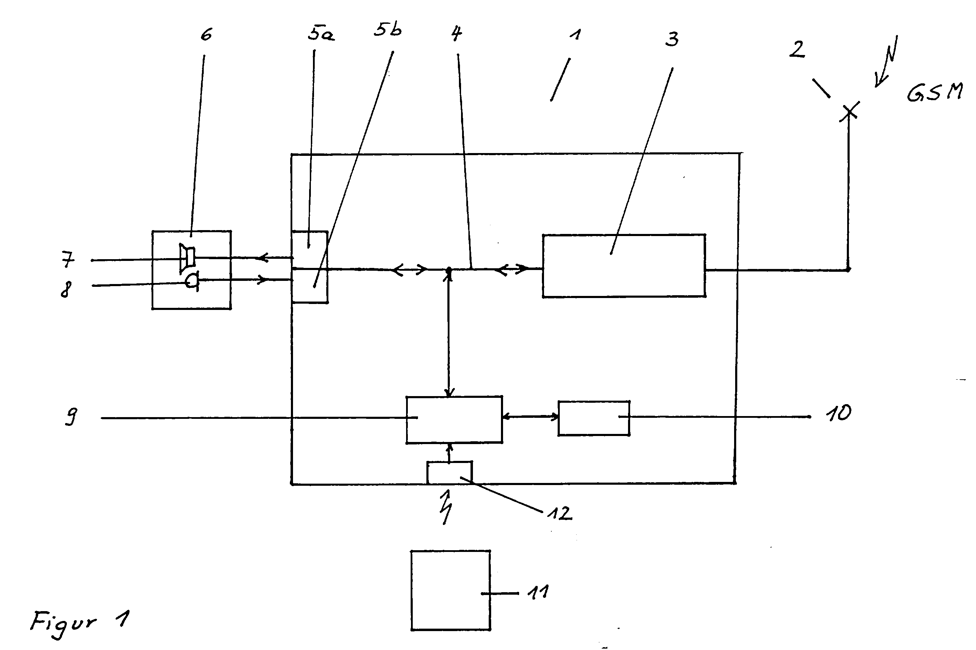

Das im Blockschaltbild in Fig. 1 dargestellte Ausführungsbeispiel besteht aus einer Sende-/Empfangseinheit 1, welche über eine Antenne 2 ein Funksignal nach dem GSM-Standard empfängt.

Ein digitaler Signalprozessor 3 der Sende-/Empfangseinheit 1 decodiert das empfangene Funksignal und wandelt es in eine digitale Sprachinformation um. Diese Sprachinformation wird über die Datenleitung 4 an eine Wandlereinheit weitergeleitet. Die Wandlereinheit enthält einen D/A-Wandler 5a, welcher die digitale Sprachinformation in eine analoge Sprachinformation umwandelt und an eine einen Lautsprecher 7 enthaltende externe Einrichtung 6 ausgibt. Die externe Einrichtung 6 ist dabei eine Freisprecheinrichtung.

Die Einrichtung 6 enthält weiterhin ein Mikrofon 8, mittels welchem eine Sprachinformation erzeugt wird und an den A/D-Wandler der Wandlereinheit 5 weitergeleitet werden. Die so gewandelten digitale Informationen werden im digitalen Sprachprozessor 3 codiert und über die Antenne 2 als Funksignal an das GSM-Netzwerk abgegeben und von diesem zum entsprechenden Empfänger geleitet.

An der digitalen Datenleitung 4 werden noch vor der Wandlereinheit 5 die digitalen Sprachinformationen abgegriffen und über eine Logikeinheit 9 in einem Digitalspeicher 10 abgelegt.

Bei der Anwendung in einem Mobiltelefon sind die Sende-/Empfangseinheit 1 und die Einrichtung 6 in einer baulichen Einheit zusammengefasst.

Mit Hilfe eines Eingabegerätes 11, das Bestandteil eines Fahrzeuginformationssystems ist, werden über die Logikeinheit 9 an den Speicher 10 Steuersignale gesendet, aufgrund welcher die vom Sprachprozessor 3 gelieferten digitalen Signale gespeichert bzw. zur Ausgabe abgerufen werden können.

Vorzugsweise wird das Steuersignal von der Eingabeeinheit 11 als Infrarotsignal auf einen Infrarotempfänger 12 übertragen. Es sind aber auch andere Übertragungsmöglichkeiten denkbar.

Die Bedieneroberfläche des Eingabegerätes 11 weist eine hochauflösende Eingabefläche 13 auf. Um eine handgerechte Bemaßung des Eingabegerätes zu gewährleisten, beträgt die Auflösung annähernd 20 x 15 Sensorelemente, wobei jede Einzelfläche 3 bis 4 mm² groß ist. Die hohe Auflösung des Eingabefeldes 13 ermöglicht das Erkennen einer Vielzahl von Schrifttypen. Die Kontakte werden über nicht dargestellte kapazitive Sensorelemente realisiert. Auch hier sind andere Ausführungen vorstellbar.

Unterhalb des Eingabefeldes 13 befinden sich einige mechanische Tasten für spezielle Bedienfunktionen. Solche Bedienfunktionen sind z. B. Ein-/Ausschalter 14, DEL und Escape 15, Aktivierung der Zeichenerkennung 16 und des Informationsspeichers 10. Neben diesen Tasten ist eine haptisch optimierte Fingerkreuztastatur 17 vorhanden, mit deren Hilfe die Datenübertragung durch den Benutzer gesteuert werden kann. Diese Eingabeeinheit stellt somit ein kraftfahrzeugtaugliches Eingabemedium für die Eingabe alphanumerischer Daten dar.

Zur Bedienung des Informationsspeichens 10 werden die 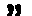 Data"-Taste 16 in Kombination mit den Tasten 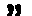 OUT" oder 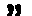 IN" der Fingerkreuztastatur 7 genutzt.

In einer anderen Ausführungsform können die Logikeinheit 9 und der Speicher 10 in der Eingabeeinheit 11 angeordnet sein und die zu speichernden Daten werden über eine geeignete Schnittstelle vom Signalprozessor 3 an die Eingabeeinheit 11 übertragen.

## Patentansprüche

1. Telekommunikationseinheit, insbesondere eine Mobilfunkeinrichtung, welche mittels eines digitalen Signalprozessors eine per Funk übermittelte Sprachinformation in eine digitale Spachinformation umwandelt, die über eine Wandlereinheit als analoge Sprachsignale ausgegeben werden und/oder umgekehrt, **dadurch gekennzeichnet**, daß in der Datenleitung (4) zwischen Signalprozessor (3) und Wandlereinheit (5) ein Signal für einen Digitalspeicher (10) zur digitalen Aufzeichnung der Sprachinformation abgegriffen wird.

2. Telekommunikationseinheit nach Anspruch 1, **dadurch gekennzeichnet**, daß der Digitalspeicher (10) ein Halbleiterspeicher ist.

3. Telekommunikationseinheit nach Anspruch 1, **dadurch gekennzeichnet**, daß der Digitalspeicher (10) in einer Sende-/Empfangseinheit (1) angeordnet ist.

4. Telekommunikationseinheit nach Anspruch 1, **dadurch gekennzeichnet**, daß die digitale Sprachinformation über einen D/A-Wandler (5a) an eine Freisprecheinrichtung (6) ausgegeben wird bzw. über einen A/D-Wandler (5b) von dieser empfangen wird.

5. Telekommunikationseinheit nach einem der Ansprüche 1 bis 4, **dadurch gekennzeichnet**, daß die Speicherung der digitalen Sprachinformation mittels einer Eingabeeinheit gesteuert wird.

6. Telekommunikationseinheit nach Anspruch 5, **dadurch gekennzeichnet**, daß die Eingabeeinheit eine Wiederholfunktion aufweist, mittels der die Ausgabe der gespeicherten Sprachinformation abrufbar ist.

7. Telekommunikationseinheit nach Anspruch 5, **dadurch gekennzeichnet**, daß die Steuersignale drahtlos übertragbar sind.

8. Telekommunikationseinheit nach einem der Ansprüche 5 bis 7, **dadurch gekennzeichnet**, daß die Eingabeeinrichtung eine alphanumerische Tastatur aufweist, mittels welcher die Steuersignale erzeugt werden.

9. Telekommunikationseinheit nach einem der Ansprüche 5 bis 8, **dadurch gekennzeichnet**, daß die Eingabeeinrichtung eine hochauflösende Eingabefläche zur Eingabe von alphanumerischen Daten durch Zeichnen aufweist, mittels welcher die Steuersignale erzeugt werden.

10. Telekommunikationseinheit nach einem der Ansprüche 5 bis 10, **dadurch gekennzeichnet**, daß die Eingabeeinrichtung mobil ausgebildet ist.
